(19) Europäisches Patentamt
European Patent Office
Office européen des brevets

(11) EP 2 632 022 A1

(12) EUROPEAN PATENT APPLICATION
published in accordance with Art. 153(4) EPC

(43) Date of publication:
28.08.2013 Bulletin 2013/35

(51) Int Cl.:
$H02J\ 13/00\ ^{(2006.01)}$    $H02J\ 3/00\ ^{(2006.01)}$

(21) Application number: 11834005.8

(22) Date of filing: 07.10.2011

(86) International application number:
PCT/JP2011/005671

(87) International publication number:
WO 2012/053159 (26.04.2012 Gazette 2012/17)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 19.10.2010 JP 2010234882

(71) Applicant: Panasonic Corporation
Osaka 571-8501 (JP)

(72) Inventors:
• IKEDA, Toshihisa
  Osaka 540-6207 (JP)
• TSUJIMURA, Satoshi
  Osaka 540-6207 (JP)

• NAKATANI, Naofumi
  Osaka 540-6207 (JP)
• TOYOTA, Hiromi
  Osaka 540-6207 (JP)
• KOUDA, Tetsuya
  Osaka 540-6207 (JP)
• KURIMOTO, Kazunori
  Osaka 540-6207 (JP)
• YOSHIMURA, Yasuo
  Osaka 540-6207 (JP)

(74) Representative: Schwabe - Sandmair - Marx
Patentanwälte
Stuntzstraße 16
81677 München (DE)

(54) APPARATUS CONTROL DEVICE AND APPARATUS CONTROL METHOD

(57) Provided are an apparatus control device and an apparatus control method that make it possible to improve convenience for the user. An apparatus control device (10) includes: a time-shift time computation unit (14) that computes a time-shift time indicating an operation start time or an operation end time at which an electricity cost billed when an electric apparatus (20) is operated is equal to or less than a predetermined rate, a recomputation determination unit (17) that determines whether or not to change the time-shift time computed by the time-shift time computation unit (14), and a notification unit (18) that, when determination is made by the recomputation determination unit (17) that the time-shift time is to be changed, notifies the user that the initially computed time-shift time is to be changed.

FIG.2

**Description**

Technical Field

The present invention relates to an apparatus control device and an apparatus control method for controlling the operation start time or operation end time of an electric apparatus.

Background Art

A power load leveling system that suggests a time zone with a low load of a power supply device of an electric power supply company within a single day and prompts the use of electric power in this time zone to each customer has been suggested (see, for example, Patent Literature 1).
In the abovementioned power load leveling system, the time zone (recommended time interval for power use) with a low load of a power supply device within a single day is suggested to each customer and the use of electric power within this time zone is prompted, thereby making it possible to increase the bottom power of power demand. Further, the peak demand can thus be also expected to be reduced, and the entire load of the power supply device is leveled.
Since by leveling the load it is possible to reduce the cost of controlling the amount of power generated by the power supply device according to the power demand at the electric power supply company, not only the recommended time interval for power use is suggested, but where the electricity rate within this period is reduced, the electric power user, who is the consumer, can be expected to use intentionally the inexpensive power within this period, thereby making it possible to level the power demand even more effectively.
As an example, electric water heaters and heat-pump hot-water feeders in which water is boiled by using a deep-night power contract or time-zone illumination contract to level the power demand in a single day have already gained popularity in households. Hot water boiled by using electric power with a low electricity rate of the previous deep night (for example, from 11 PM to 7 AM) is stored in a hot-water storage tank, and this water is used in the morning, daytime, and evening for cooking, shower, and taking bath, thereby shifting the power demand for boiling water to the deep-night time zone of the previous day.
Such electric water heaters and heat-pump hot-water feeders adapted to deep-night power consumption have an incorporated clock means, and the water heating operation is started when the time is reached that has been set in advance in the contract with the electric power supply company. In other words, the planned operation is performed each day at a preset operation start time (or operation end time).
Natural energy generators such as solar power generators or wind power generators will apparently be widely spread in the future, but that the amount of power generated by the natural energy generators will supposedly change significantly depending on the weather or time of the day.
Accordingly, techniques for controlling power demand will become more important in the future. Thus, not only the conventional systems for leveling power demand and controlling the amount of generated power accordingly, but also new systems in which power demand is controlled according to the changing amount of generated power will be necessary.
For example, electric power supply companies change the electricity rate according to the changing amount of generated power, and where the electricity rate is reduced when the amount of generated power is large and the electricity rate is increased when the amount of generated power is small, the power demand can be controlled according to the changing amount of generated power.
In some countries a real-time pricing system has been introduced for the regions where solar power generators and wind power generators are widely spread. With such a deep-night power contract, the electricity rate is reduced in a time zone determined by the deep-night power contract to be from 11 PM to 7 AM every day, and since with real-time pricing, the electricity range changes in real time according to the amount of power generated by the solar power generators and wind power generators, the electricity rate changes from day to day even within the same time zone.
For example, electricity rate information (a table including time zones and electricity rates) indicating how the electricity rate increases or decreases from hour to hour is distributed by the electric power supply company to the customers. The distribution frequency of the electricity rate information is, for example, such that the electricity rate information for the following day is distributed today. Alternatively, the electricity rate information for the afternoon is distributed in the morning of the same day. The user operates electric apparatuses with reference to this electricity rate information.
However, such real-time pricing is not considered in the abovementioned Patent Literature 1. Therefore, when household apparatuses are operated by selecting a time zone with a low electricity rate on the basis of the electricity rate information or electricity rate menu provided from the electric power supply company, the convenience for the user may be lacking.
For example, the electricity cost can be reduced by operating an electric apparatus within a time zone with a low electricity rate, as described in Patent Literature 1. Where such an approach is applied to the electricity rate information that changes frequently, as in the case of real-time pricing, the operation time of the electric apparatus changes each time the time zone with a low electricity rate changes. As a result, the operation start time that has been initially set by the user sometimes differs from the operation start time at which the operation of the electric apparatus is actually started.

In Patent Literature 1, the possibility of changing the operation start time or operation end time that has been initially set is not considered. As a result, when the operation start time that has been initially set is changed, the user cannot know that the operation start time has been changed and cannot know when the operation of the electric apparatus will be started.

Citation List

Patent Literature

Patent Literature 1: Japanese Patent Application Publication No. 2007-124793

Summary of the Invention

The present invention has been created to resolve the above-described problems and it is an object thereof to provide an apparatus control device and an apparatus control method that make it possible to improve convenience for the user.

The apparatus control device according to one aspect of the present invention includes: a time-shift time computation unit that computes a time-shift time indicating an operation start time or an operation end time at which an electricity cost billed when an electric apparatus is operated is equal to or less than a predetermined rate; a change determination unit that determines whether or not to change the time-shift time computed by the time-shift time computation unit; and a notification unit that notifies a user that the initially computed time-shift time is to be changed when it is determined by the change determination unit that the time-shift time is to be changed.

With such a configuration, the time-shift time computation unit computes the time-shift time indicating the operation start time or operation end time at which the electricity cost billed when the electric apparatus is operated is equal to or less than the predetermined rate. The change determination unit determines whether or not to change the time-shift time computed by the time-shift time computation unit. The notification unit notifies the user that the initially computed time-shift time is to be changed when determination is made by the change determination unit that the time-shift time is to be changed.

In accordance with the present invention, when the initially computed time-shift time is changed, the user is notified that the initially computed time-shift time is changed. Therefore, the user can recognize that the initially computed time-shift time is to be changed and the convenience for the user can be improved.

Objectives, features, and advantages of the present invention will become more apparent from the following detailed explanation and the appended drawings.

Brief Description of the Drawings

Fig. 1 illustrates the entire configuration of the apparatus control system according to Embodiment 1 of the present invention.
Fig. 2 is a block diagram illustrating the configuration of the apparatus control system according to Embodiment 1 of the present invention.
Fig. 3 is the first flowchart for explaining the operation of the household apparatus in Embodiment 1.
Fig. 4 is the second flowchart for explaining the operation of the household apparatus in Embodiment 1.
Fig. 5 is the first flowchart for explaining the operation of the apparatus control device in Embodiment 1.
Fig. 6 is the second flowchart for explaining the operation of the apparatus control device in Embodiment 1.
Fig. 7 is a schematic diagram for explaining the time-shift time in Embodiment 1 of the present invention.
Fig. 8 is a schematic diagram for explaining the recomputation of the time-shift time in Embodiment 1.
Fig. 9 is a block diagram illustrating the configuration of the apparatus control system according to Embodiment 2 of the present invention.
Fig. 10 is a first flowchart illustrating the operation of the apparatus control device in Embodiment 2.
Fig. 11 is a second flowchart illustrating the operation of the apparatus control device in Embodiment 2.
Fig. 12 is a schematic diagram for explaining the scheduled operation period before the recalculation of the time-shift time in Embodiment 2.

Fig. 13 is a schematic diagram for explaining the scheduled operation period after the recalculation of the time-shift time in Embodiment 2.

Description of Embodiments

The embodiments of the present invention will be explained below with reference to the appended drawings. The embodiments below are examples of specific implementation of the present invention and place no limitation on the technical scope of the present invention.

Embodiment 1

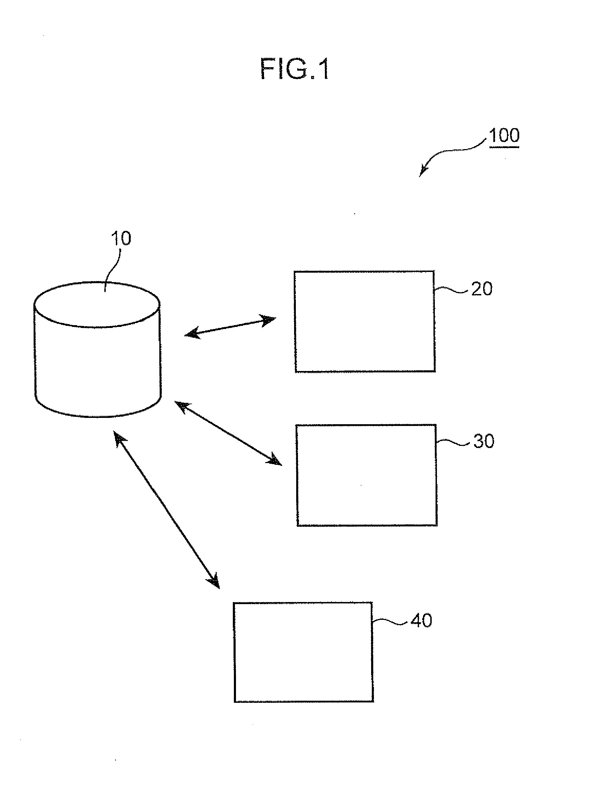

Fig. 1 illustrates the entire configuration of the apparatus control system according to Embodiment 1 of the present invention. An apparatus control system 100 shown in Fig. 1 includes an apparatus control device 10 and household apparatuses 20, 30, and 40.

The household apparatuses 20, 30, and 40 are, for example, washing and drying machines, rice cookers, electric water heaters, dishwashing machines, clothing driers, air conditioners, electromagnetic cookers (IH), and garbage processors.

The apparatus control device 10 and the household apparatuses 20, 30, and 40 are connected to each other so as to be capable of exchange information by a wireless or wire home network. Fig. 1 shows the configuration in which three household apparatuses 20, 30, and 40 are connected to the apparatus control device 10, but the present invention is not limited to such a configuration and two or less, or four or more household apparatuses may be connected to the apparatus control device 10.

The apparatus control device 10 may be provided outside the house, rather than inside thereof. In this case, the household apparatuses 20, 30, and 40 are connected via an external network such as Internet. Further, a configuration may be also used in which the apparatus control device 10 is not provided and one of the household apparatuses 20, 30, and 40 functions as the apparatus control device 10.

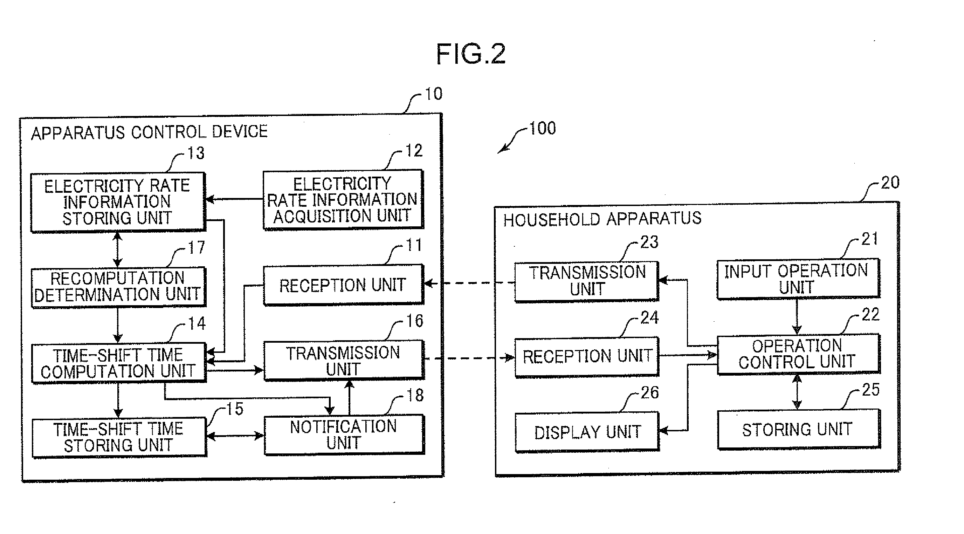

Fig. 2 is a block diagram illustrating the configuration of the apparatus control system according to Embodiment 1 of the present invention. Since the household apparatuses 20, 30, and 40 have the same configuration, only the household apparatus 20 is shown in Fig. 2

The apparatus control device 10 includes a reception unit 11, an electricity rate information acquisition unit 12, an electricity rate information storing unit 13, a time-shift time computation unit 14, a time-shift time storing unit 15, a transmission unit 16, a recomputation determination unit 17, and a notification unit 18.

The reception unit 11 receives various data, information, and signals transmitted by the household apparatus 20. The reception unit 11 receives a time-shift time computation start signal transmitted by the household apparatus 20. The time-shift time computation start signal indicates the start of time-shift time computation and includes identification information for identifying the household apparatus 20, operation period information indicating a period required for the operation of the household apparatus 20, and power information indicating power required for the operation of the household apparatus 20.

The electricity rate information acquisition unit 12 acquires electricity rate information indicating electricity rate that changes with time. The electricity rate information is provided, for example, by an electric power supply company. For example, the electricity rate information acquisition unit 12 acquires the electricity rate information of the present day at the previous day and stores the acquired information in the internal memory. The electricity rate information represents variation in electricity rate per 1 kWh in 24 h. The electricity rate changes with time, for example, once an hour. This reflects the real-time pricing in which the electricity cost changes in real time because the system for supplying electric power to the house changes significantly when a power supply source such as a solar cell and a fuel cell is disposed in a house where household apparatuses are present or when a storage battery is disposed.

The real-time pricing as referred to herein generally indicates electricity rate information that is provided in advance by an electric power supply company. Further, the real-time pricing sometimes indicates not only the electricity rate information from the electric power supply company, but also apparatus operation information, for example, on electric power supply source and storage battery in the house, and electricity rate information obtained from the past results relating to buying electricity rate information and selling electricity rate information.

As described hereinabove, the electricity rate information may be not only the electricity rate information from the electric power supply company, but also electricity rate information adapted only in a certain house that is obtained from the past results relating to information on a buying electricity rate and information on a selling electricity rate. Essentially, it is important that the electricity rate changing with time be known, and a method for acquiring this information is not important.

As mentioned hereinabove, the electricity rate information uses real-time pricing in which the rate is changed finely in each time unit on the basis of power demand estimation. Power demand variation factors include a season, a weekday, meteorological conditions (air temperature, relative humidity, and weather), operation plans of large consumers, social factors (sports events and the like), and economic trends, but among them power demand is most closely related to meteorological conditions. For example, the effect of 1-degree change in air temperature is estimated to be 3% in power consumption in the summer and 1.5% in power consumption in the winter.

Further, in recent years, the installation of solar power plants is rigorously executed and there is a trend to using power obtained by solar power plant in the entire society. The amount of power generated by solar power plants is closely correlated with the sunshine duration, and the effect of sunshine duration is greater than that of air temperature variations.

For example, when the air temperature is higher than expected and it is very hot, but the sun is behind the clouds and sufficient sunshine duration is not obtained, the power demand increases, but sufficient power supply from solar power plants cannot be obtained. In this respect, the accuracy of weather forecast directly affects the power demand estimation. However, at present it is difficult to predict accurately the regional temperature and sunshine duration.

Presently, unpredictable power demand fluctuations inevitably occur, and therefore real-time pricing in which the electricity rate is changed in each certain unit time (for example, a 3-h time) following power demand fluctuations is required. For this reason, the feature of shifting the operation time of household apparatuses (the so-called time shift) is required as a basic function of household apparatuses.

The electricity rate information storing unit 13 stores the electricity rate information acquired by the electricity rate information acquisition unit 12. In the present embodiment, the electricity rate information storing unit 13 stores the electricity rate information acquired by the electricity rate information acquisition unit 12, but the present invention is not limited to such a configuration, and the electricity rate information inputted by the user may be also stored.

The time-shift time computation unit 14 computes as a time-shift time the operation start time at which the electricity cost billed when the household apparatus 20 is operated is equal to or less than a predetermined rate. The time-shift time computation unit 14 computes the operation start time at which the electricity cost billed when the household apparatus 20 is operated is the lowest on the basis of the operation period information and electric power information received by the reception unit 11 and the electricity rate information stored in the electricity rate information storing unit 13. The time-shift time computation unit 14 may compute not only the operation start time, but also only the operation end time, or both the operation start time and the operation end time.

The time-shift time storing unit 15 stores the time-shift time computed by the time-shift time computation unit 14, the operation period information used when this time-shift time was computed, and electric power information used when this time-shift time was computed, in association with the identification information received by the reception unit 11. The time-shift time storing unit 15 stores the time-shift time, operation period information, and electric power information for each household apparatus.

The transmission unit 16 transmits various data, information, and signals to the household apparatus 20. The transmission unit 16 transmits the time-shift time computed by the time-shift time computation unit 14 to the household apparatus 20. When the received time-shift time is corrected in the household apparatus 20, the reception unit 11 receives a confirmation signal including the corrected time-shift time, and the corrected time-shift time is stored in the time-shift time storing unit 15.

The recomputation determination unit 17 determines whether or not to change the time-shift time computed by the time-shift time computation unit 14. More specifically, the recomputation determination unit 17 determines whether or not to recompute the time-shift time computed by the time-shift time computation unit 14. The recomputation determination unit 17 monitors the electricity rate information stored in the electricity rate information storing unit 13 and determines whether or not the electricity rate information has been updated. When the recomputation determination unit 17 determines that the electricity rate information has been updated, the recomputation determination unit instructs the time-shift time computation unit 14 to recompute the time-shift time. The recomputation determination unit 17 in the present embodiment corresponds to an example of a change determination unit.

When the recomputation determination unit 17 determines that the time-shift time should be recomputed, the time-shift time computation unit 14 recomputes the time-shift time. In this case, the time-shift time computation unit 14 computes the operation start time at which the electricity cost billed when the household apparatus 20 is operated is the lowest on the basis of the operation period information and electric power information stored in the time-shift time storing unit 15 and the updated electricity rate information stored in the electricity rate information storing unit 13.

When the recomputation determination unit 17 determines that the time-shift time is to be changed, the notification unit 18 notifies the user that the initially computed time-shift time is to be changed. When the time-shift time recomputed by the time-shift time computation unit 14 is different from the time-shift time initially computed by the time-shift time computation unit 14, the notification unit 18 notifies the user that the initially computed time-shift time is changed. The time-shift time computation unit 14 determines whether or not the time-shift time recomputed by the time-shift time computation unit 14 is the same as the initially calculated time-shift time that is stored in the time-shift time storing unit 15. When it is determined that the time-shift time recomputed by the time-shift time computation unit 14 is different from the initially calculated time-shift time that is stored in the time-shift time storing unit 15, the notification unit 18 outputs a notification signal indicating that the initially calculated time-shift time that is changed to the transmission unit 16. The transmission unit 16 transmits the notification signal created by the notification unit 18 to the household apparatus 20.

The following six patterns can be considered for the user notification timing.

The first notification timing is immediately before the operation start time after the change. Immediately before the operation start time after the change, as referred to herein, is preferably, for example, 1 min to 15 min before the operation start time after the change. The notification unit 18 incorporates a timer, and where the present time is immediately before the operation start time after the change, the notification unit outputs the notification signal to the transmission unit 16.

The second notification timing is the operation start time after the change. Where the present time is the operation start time after the change, the notification unit 18 outputs the notification signal to the transmission unit 16.

The third notification timing is immediately after the operation start time after the change. Immediately after the operation start time after the change, as referred to herein, is preferably, for example, 1 min to 15 min before the operation start time after the change. Where the present time is immediately after the operation start time after the change, the notification unit 18 outputs the notification signal to the transmission unit 16.

The fourth notification timing is the operation end time after the change. Where the present time is the operation end time after the change, the notification unit 18 outputs the notification signal to the transmission unit 16.

The fifth notification timing is the operation start timing before the change (initial timing). Where the present time is the operation start timing before the change, the notification unit 18 outputs the notification signal to the transmission unit 16.

The sixth notification timing is the point of time of change at the operation start time (time-shift time). The notification unit 18 outputs the notification signal to the transmission unit 16 at a point of time at which the time-shift time after the change is transmitted to the household apparatus 20.

In Embodiment 1, the user can be notified that the initially computed time-shift time is to be changed at the abovementioned first to sixth notification timings. In the explanation below, an example in which the user is notified at the first notification timing is mainly explained.

The household apparatus 20 is provided with an input operation unit 21, an operation control unit 22, a transmission unit 23, a reception unit 24, a storing unit 25, and a display unit 26.

The input operation unit 21 receives input operations from the user.

When the power source is ON, the operation control unit 22 generates a time-shift time computation start signal for indicating the start of time-shift time computation and outputs the generated time-shift time computation start signal to the transmission unit 23. As described hereinabove, the time-shift time computation start signal includes identification information for identifying the household apparatus 20, operation period information indicating the period in which the household apparatus 20 is required to operate, and electric power information indicating electric power required for the operation of the household apparatus 20. When the power source is ON, the operation control unit 22 reads the identification information, operation period information and electric power information that have been stored in advance, and outputs the time-shift time computation start signal including the identification information, operation period information and electric power information that have been read to the transmission unit 23.

The transmission unit 23 transmits various data, information, and signals to the apparatus control device 10. The transmission unit 23 transmits the time-shift time computation start signal outputted from the operation control unit 22 to the apparatus control device 10. When the time-shift time transmitted by the apparatus control device 10 is corrected, the transmission unit 23 transmits the confirmation signal including the corrected time-shift time to the apparatus control device 10.

The reception unit 24 receives various data, information, and signals transmitted by the apparatus control device 10. The reception unit 24 receives the time-shift time transmitted by the apparatus control device 10 and also receives a notification signal transmitted by the apparatus control device 10.

The storing unit 25 stores the time-shift time received by the reception unit 24. The operation control unit 22 controls the operation of the household apparatus 20 on the basis of the operation start time stored in the storing unit 25. Thus, the operation control unit 22 incorporates a timer and performs control such that where the present time is the operation start time stored in the storing unit 25, a start signal is outputted and the operation of the household apparatus 20 is started.

When the reception unit 24 receives the notification signal, the display unit 26 displays that the initially computed time-shift time is to be changed. The display unit 26 may also display the time-shift time recomputed by the time-shift time computation unit 14 together with the time-shift time initially computed by the time-shift time computation unit 14, or may display only the time-shift time recomputed by the time-shift time computation unit 14.

When the notification is made at the first notification timing, the display unit 26 displays that the operation of the household apparatus 20 is started immediately before the operation start time of the household apparatus 20 that is specified on the basis of the recomputed time-shift time. When the notification is made at the second notification timing, the display unit 26 displays that the operation of the household apparatus 20 is started at the operation start time of the household apparatus 20 that is specified on the basis of the recomputed time-shift time. When the notification is made at the third notification timing, the display unit 26 displays that the operation of the household apparatus 20 is to be ended immediately before the operation end time of the household apparatus 20 that is specified on the basis of the recomputed time-shift time.

When the notification is made at the fourth notification timing, the display unit 26 displays that the operation of the household apparatus 20 is to be ended at the operation end time of the household apparatus 20 that is specified on the basis of the recomputed time-shift time. When the notification is made at the fifth notification timing, the display unit 26 displays that the operation start time of the household apparatus 20 has been changed at the operation start time of the household apparatus 20 that is specified on the basis of the time-shift time before the change (initial time). When the notification is made at the sixth notification timing, the display unit 26 displays that the operation start time of the household apparatus 20 has been changed when the initial time-shift time is changed.

The operation of the household apparatus in Embodiment 1 is explained below.

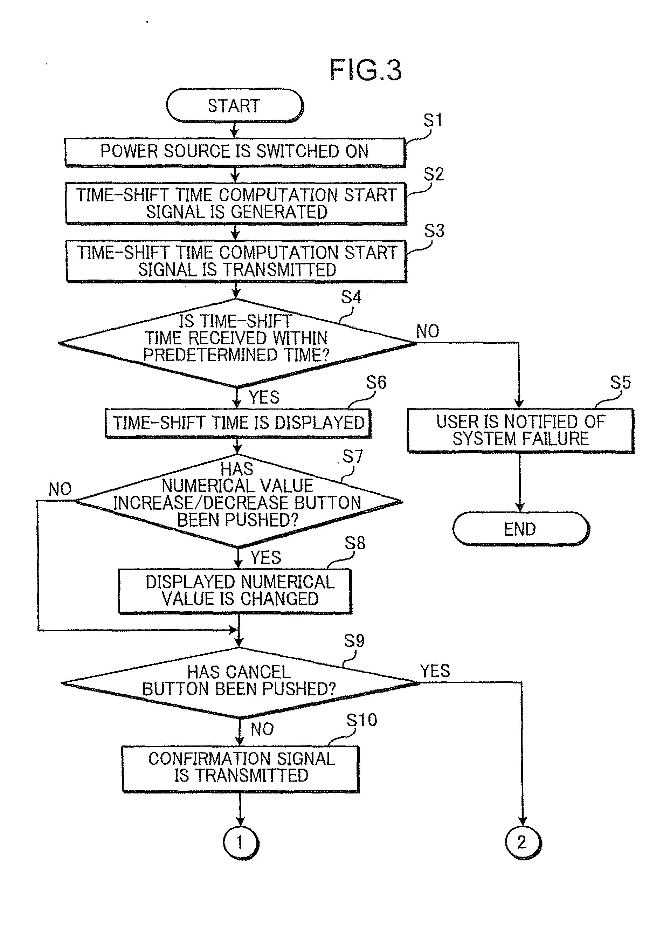

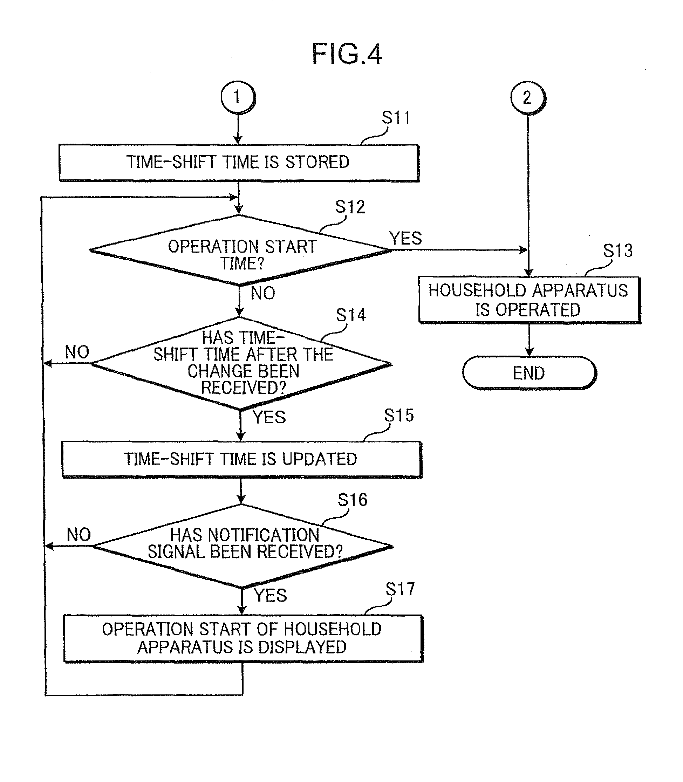

Figs. 3 and 4 are flowcharts for explaining the operation of the household apparatus in Embodiment 1.

First, in step S1 the user uses the input operation unit 21 to switch on the power source.

Then, in step S2, the operation control unit 22 generates the time-shift time computation start signal for indicating the start of time-shift time computation. The operation control unit 22 reads the identification information, operation period information and electric power information that have been stored in advance, and generates the time-shift time computation start signal including the identification information, operation period information and electric power information that have been read. The operation control unit 22 outputs the generated time-shift time computation start signal to the transmission unit 23.

In Embodiment 1, the identification information, operation period information and electric power information that have been stored in advance and are uniquely specified when the power source is switched ON are read out, but the present invention is not particularly limited to such a configuration, and the identification information, operation period information and electric power information may be inputted by the user via the input operation unit 21. Further, the input operation unit 21 may also accept the input of operation conditions from the user and specify the operation period information and electric power information on the basis of the accepted operation conditions.

For example, where the household apparatus 20 is a washing and drying machine, by selecting a washing course (standard course, economy course, short-time course, or the like) with the input operation unit 21, it is possible to specify the operation period information and electric power information corresponding to this washing course. Therefore, it is not necessary for the user to input the operation period information and electric power information. Essentially when the operation period information and electric power information are specified by some input information, the user is not required to input the information of each type.

Further, the household apparatus 20 may store the information inputted by the input operation unit 21 in the internal memory. In this case, where the information inputted by the input operation unit 21 is the information requiring conversion from the operation conditions such as a washing course, the input operation unit 21 stores in advance the conversion correspondence table in which the operation period information and electric power information corresponding to the washing course are determined.

In particular, where the household apparatus 20 is a washing and drying machine, a plurality of steps (for example, a washing step, a dewatering step, a drying step, and the like) is conducted sequentially during the operation. Therefore, the operation period information and electric power information become complex. The input operation unit 21 stores a plurality of types of electric power information for each sensor result, such as the washing course, weight of the clothing to be washed, and external air temperature.

Then, in step S3, the transmission unit 23 transmits the time-shift time computation start signal outputted from the operation control unit 22 to the apparatus control device 10.

In step S4, the operation control unit 22 determines whether or not the time-shift time has been received within a predetermined time interval. The predetermined time interval, as referred to herein, is a time-out interval for waiting the transmission of the time-shift time from the apparatus control device 10. This predetermined time interval is set, for example, to 5 min. In this case, when it is determined that the time-shift time has not been received within the predetermined interval (NO in step S4), the operation control unit 22 notifies the user of a system failure in step S5. Thus, the operation control unit 22 displays on the display unit 26 a display screen indicating that some failure has occurred in the operation control system.

Meanwhile, where it is determined that the time-shift time has been received within the predetermined time interval (YES in step S4), the operation control unit 22 performs the control in step S6 such that the time-shift time received by the reception unit 24 is displayed at the display section 26. The display unit 26 displays the time-shift time.

Then, in step S7, the operation control unit 22 determines whether or not a numerical value increase/decrease button provided at the input operation unit 21 has been pushed. Where the numerical value increase/decrease button is pushed, the time-shift time displayed at the display unit 26 can be increased or decreased. In this case, where it is determined that the numerical value increase/decrease button has not been pushed (NO in step S7), the processing flow advances to step S9.

Meanwhile, where it is determined that the numerical value increase/decrease button has been pushed (YES in step S7), the operation control unit 22 performs the control in step S8 such as to change the numerical value of the time-shift time displayed at the display unit 26 according to the depression of the numerical value increase/decrease button.

Then, in step S9, the operation control unit 22 determines whether or not a cancel button provided at the input operation unit 21 has been pushed. Where the cancel button is pushed, the operation control unit 22 cancels the time-shift time displayed at the display unit 26. In this case, where it is determined that the cancel button has been pushed (YES in step S9), the processing flow advances to step S 13, and the operation control unit 22 performs the control to start the operation of the household apparatus 20 immediately.

In Embodiment 1, where it is determined in step S9 that the cancel button has been pushed, the operation of the household apparatus 20 is started immediately, but the present invention is not limited to such a configuration, and when it is determined that the cancel button has been pushed, the operation control unit 22 may perform the control such as to display a screen for accepting the input of the operation start time made by the user. In this case, the input operation unit 21 accepts the input of the operation start time from the user.

Meanwhile, when it is determined that the cancel button has not been pushed, that is, when a confirmation button provided at the input operation unit 21 has been pushed (NO in step S9), the operation control unit 22 transmits the confirmation signal including the confirmed time-shift time to the apparatus control device 10 in step S10.

Then, in step S 11, the operation control unit 22 stores the confirmed time-shift time in the storing unit 25.

Then, in step S12, the operation control unit 22 determines whether or not the present time is the operation start time (time-shift time) stored in the storing unit 25. When it is determined that the present time is the operation start time stored in the storing unit 25 (YES in step S12), the operation control unit 22 starts the operation of the household apparatus 20 in step S13. When the operation conditions have been inputted by using the input operation unit 21, the operation control unit 22 operates the household apparatus 20 according to the operation conditions.

Meanwhile, when it is determined that the present time is not the operation start time stored in the storing unit 25 (NO in step S12), the operation control unit 22 determines in step S14 whether or not the time-shift time after the change has been received from the apparatus control device 10. In this case, when it is determined that the time-shift time after the change has not been received from the apparatus control device 10 (NO in step S14), the processing flow returns to step S12.

Meanwhile, when it is determined that the time-shift time after the change has been received from the apparatus control device 10 (YES in step S14), the operation control unit 22 updates in step S 15 the operation start time stored in the storing unit 25 to the time-shift time after the change that has been received by the reception unit 24.

Then, in step S16, the operation control unit 22 determines whether or not the notification signal has been received from the apparatus control device 10. In this case, when it is determined that the notification signal has not been received from the apparatus control device 10 (NO in step S16), the processing flow returns to step S12.

Meanwhile, when it is determined that a notification signal has been received from the apparatus control device 10 (YES in step S16), the operation control unit 22 performs the control in step S17 such that a display screen notifying that the operation of the household apparatus 20 is started is displayed at the display unit 26, and the processing flow returns to step S12. The display unit 26 displays the display screen notifying that the operation of the household apparatus 20 is started.

The operation of the apparatus control device in Embodiment 1 will be explained below.

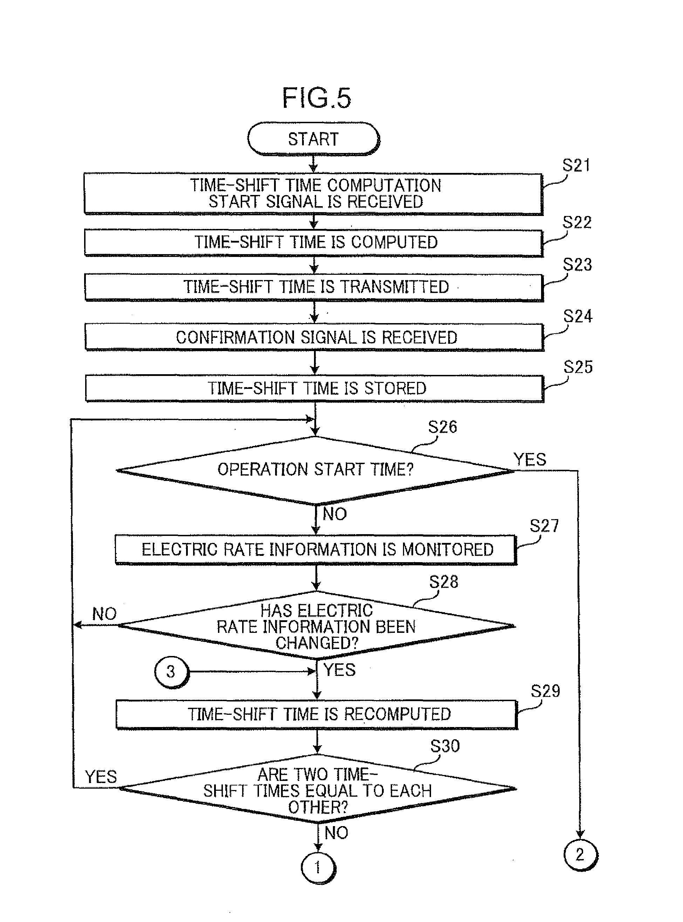

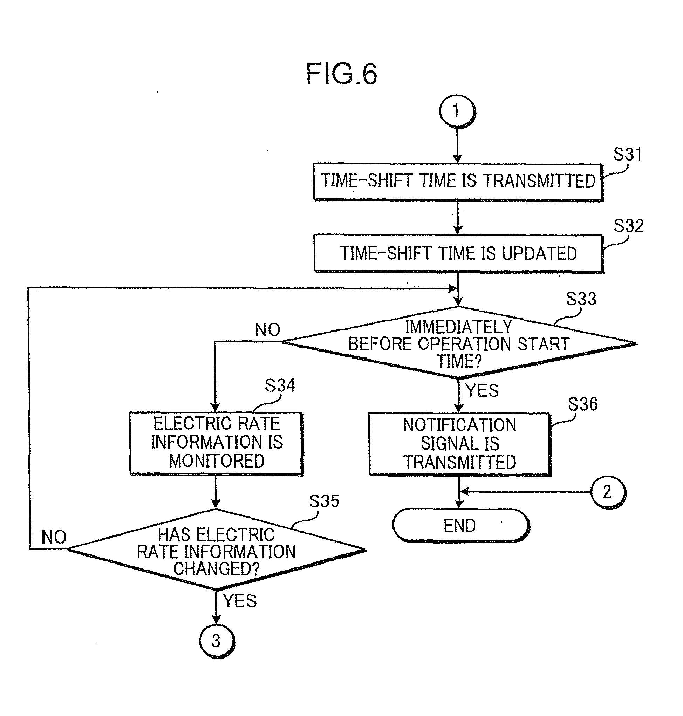

Figs. 5 and 6 are flowcharts illustrating the operation of the apparatus control device in Embodiment 1.

First, in step S21, the reception unit 11 receives the time-shift time computation start signal transmitted from the household apparatus 20.

Then, in step S22, the time-shift time computation unit 14 computes the operation start time at which the electricity cost billed when the household apparatus 20 is operated is the lowest on the basis of the operation period information and electric power information received by the reception unit 11 and the electricity rate information stored in the electricity rate information storing unit 13. The time-shift time computation unit 14 outputs the computed time-shift time to the transmission unit 16 and the time-shift time storing unit 15. The electricity rate information acquisition unit 12 periodically acquires the electricity rate information and stores the acquired information in the electricity rate information storing unit 13.

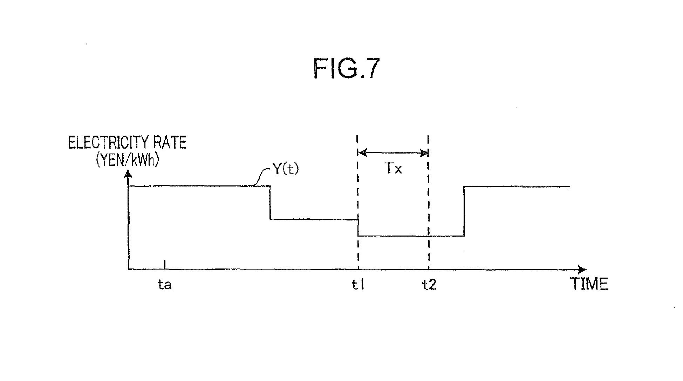

Fig. 7 is a schematic diagram illustrating the time-shift time in Embodiment 1 of the present invention. In Fig. 7, a time is plotted against the abscissa, and the electricity rate (yen/kWh) is plotted against the ordinate.

The time-shift time computation unit 14 computes the scheduled operation period Tx in which the electricity cost billed when the household apparatus 20 is operated is the lowest on the basis of the operation period information, electric power information and electricity rate information (electricity rate Y(t)), and computes the time-shift time (operation start time) on the basis of the scheduled operation period Tx. The time-shift time computation unit 14 computes the electricity cost billed when the household apparatus 20 is operated by using Equation (1) below. Thus, the time-shift time computation unit 14 can calculate the electricity cost that will be billed by multiplying the electricity rate Y(t) for each time zone by the electric power P(t) required for the operation of the household apparatus 20 and integrating the resultant value over the operation period from an operation start time t1 to an operation end time t2.

[Equation 1]

$$\text{Electricity cost} = \int_{t1}^{t2} \{ Y(t) \cdot P(t) \} \, dt \quad \cdots (1)$$

When the electricity rate is determined by the peak electric power within a specific period, the electric power P(t) is determined by factors other than time. Further, when a plurality of scheduled operation periods Tx with the lowest electricity cost is extracted, the time-shift time computation unit 14 selects the scheduled operation period Tx for which the operation start time is the closest to the present time ta, from among the plurality of scheduled operation periods Tx.

Returning to Fig. 5, then, in step S23, the transmission unit 16 transmits the time-shift time computed by the time-shift time computation unit 14 to the household apparatus 20.

Then, in step S24, the reception unit 11 receives the confirmation signal transmitted from the household apparatus 20. The confirmation signal includes the time-shift time confirmed by the household apparatus 20. The time-shift time confirmed by the household apparatus 20 is the time-shift time transmitted by the transmission unit 16, or the time-shift time corrected by the household apparatus 20.

Then, in step S25, the time-shift time storing unit 15 stores the time-shift time computed by the time-shift time computation unit 14, the operation period information used for computing the time-shift time, and the electric power information used for computing the time-shift time in association with the identification information received by the reception unit 11. When the time-shift time included in the confirmation signal differs from the time-shift time computed by the time-shift time computation unit 14, the time-shift time storing unit 15 stores the time-shift time included in the confirmation signal.

Then, in step S26, the recomputation determination unit 17 determines whether or not the present time is the operation start time (time-shift time) stored in the time-shift time storing unit 15. In this case, where it is determined that the present time is the operation start time (time-shift time) stored in the time-shift time storing unit 15 (YES in step S26), the processing in the apparatus control device 10 is ended.

Meanwhile, where it is determined that the present time is not the operation start time (time-shift time) stored in the time-shift time storing unit 15 (NO in step S26), the recomputation determination unit 17 monitors in step S27 the electricity rate information stored in the electricity rate information storing unit 13.

Then, in step S28, the recomputation determination unit 17 determines whether or not the electricity rate information stored in the electricity rate information storing unit 13 has been updated. In this case, where it is determined that the electricity rate information stored in the electricity rate information storing unit 13 has not been updated, (NO in step S28), the processing returns to step S26.

Meanwhile, where it is determined that the electricity rate information stored in the electricity rate information storing unit 13 has been updated, (YES in step S28), the time-shift time computation unit 14 recomputes the time-shift time in step S29. In this case, the time-shift time computation unit 14 computes the operation start time at which the electricity cost billed when the household apparatus 20 is operated is the lowest on the basis of the operation period information and electric power information stored in the time-shift time storing unit 15 and the updated electricity rate information stored in the electricity rate information storing unit 13. The time-shift time computation method in step S29 is the same as the time-shift time computation method in step S22.

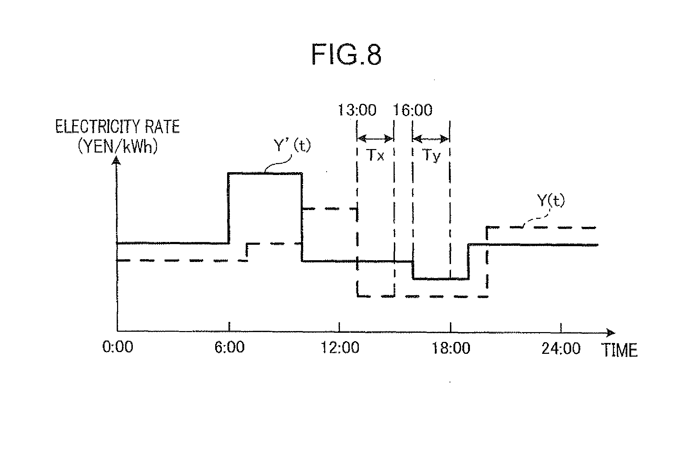

Fig. 8 is a schematic diagram explaining the recomputation of the time-shift time in Embodiment 1. In Fig. 8, the time is plotted against the abscissa, and the electricity rate (yen/kWh) is plotted against the ordinate.

Initially, the time-shift time computation unit 14 computes the scheduled operation period Tx in which the electricity cost billed when the household apparatus 20 is operated is the lowest on the basis of the operation period information and electric power information received from the reception unit 11 and the electricity rate information (electricity rate Y(t)) stored in the electricity rate information storing unit 13, and then computes the time-shift time (operation start time) on the basis of the scheduled operation period Tx.

Then, where the electricity rate Y(t) has been updated to an electricity rate Y'(t), the time-shift time computation unit 14 computes the scheduled operation period Ty in which the electricity cost billed when the household apparatus 20 is operated is the lowest on the basis of the operation period information and electric power information stored in the time-shift time storing unit 15 and the updated electricity rate information (electricity rate (Y'(t)) stored in the electricity rate information storing unit 13, and then computes the time-shift time (operation start time) on the basis of the scheduled operation period Ty.

As shown in Fig. 8, where the electricity rate Y(t) has been updated to the electricity rate Y'(t), the time-shift time is recomputed and the scheduled operation period Ty is computed anew. As a result, the time-shift time is updated from the initial 13:00 to 16:00.

Returning to Fig. 5, then, in step S30, the time-shift time computation unit 14 determines whether or not the time-shift time recomputed by the time-shift time computation unit 14 is the same as the initially computed time-shift time stored in the time-shift time storing unit 15. Where it is determined that the recomputed time-shift time is the same as the initially computed time-shift time (YES in step S30), the processing returns to step S26.

Meanwhile, where it is determined that the recomputed time-shift time is different from the initially computed time-shift time (NO in step S30), the transmission unit 16 transmits in step S31 the time-shift time recomputed by the time-shift time computation unit 14 to the household apparatus 20.

Then, in step S32, the time-shift time storing unit 15 updates the stored time-shift time to the time-shift time recomputed by the time-shift time computation unit 14.

Then, in step S33, the notification unit 18 determines whether or not the present time is immediately before the time-shift time (operation start time) after the change. More specifically, the notification unit 18 determines whether or not the present time is a predetermined time (for example, 5 min) before the time-shift time (operation start time) after the change. In this case, where it is determined that the present time is not immediately before the time-shift time (operation start time) after the change (NO in step S33), the recomputation determination unit 17 monitors in step S34 the electricity rate information stored in the electricity rate information storing unit 13.

Then, in step S35, the recomputation determination unit 17 determines whether or not the electricity rate information stored in the electricity rate information storing unit 13 has been updated. Where it is determined that the electricity rate information stored in the electricity rate information storing unit 13 has not been updated (NO in step S35), the processing returns to step S33.

Meanwhile, where it is determined that the electricity rate information stored in the electricity rate information storing unit 13 has been updated (YES in step S35), the processing returns to step S29.

Where it is determined that the present time is immediately before the time-shift time (operation start time) after the change (YES in step S33), the transmission unit 16 transmits the notification signal to the household apparatus 20 in step S36.

Thus, where the initially computed time-shift time has been updated, the user is notified that the initially computed time-shift time has been updated. Therefore, the user can verify that the initially computed time-shift time is updated and convenience for the user can be increased.

Where the recomputed time-shift time is different from the initially computed time-shift time, the user is notified that the initially computed time-shift time is changed. Therefore, the user can verify that the initially computed time-shift time is changed and convenience for the user can be increased.

Where the electricity rate information indicating the electricity rate that changes with time has changed, the time-shift time is recomputed. Therefore, the time-shift time corresponding to the present electricity rate can be determined.

Further, in the present embodiment, the user is notified that the initially computed time-shift time has changed by displaying on the display unit 26, but the present invention is not particularly limited to this configuration. For example, the user may be notified by a sound. In this case, at the notification timing, for example, a buzzer sound is outputted and the user is notified that the initially computed time-shift time is changed.

Further, the display contents displayed at the display unit 26, for example, the time-shift time after the change, may be displayed by blinking, and the blinking frequency may be gradually increased as the operation start time is being approached. Further, for example, when the user is notified by a sound, the acoustic quantity of the outputted sound may be gradually increased as the operation start time is being approached. As a result, the user can be notified more reliably that the initially computed time-shift time is changed.

The display unit 26 may also display the time-shift time after the change after the operation of the household apparatus 20 has ended.

Further, the transmission unit 16 may transmit information indicating that the initially computed time-shift time is changed to a portable terminal (for example, a cellular phone) of the user at the first to sixth notification timings. In this case, it is displayed at the display unit of the portable terminal that the initially computed time-shift time is changed.

In Embodiment 1, the operation control unit 22 of the household apparatus 20 incorporates a timer and determines whether or not the present time is the operation start time (time-shift time) stored in the storing unit 25, but the present invention is not limited to this configuration. In the case where the operation control unit 22 does not incorporate a timer, when the present time is the operation start time (time-shift time) stored in the time-shift time storing unit 15, the transmission unit 16 of the apparatus control device 10 may transmit a start signal for starting the operation of the household apparatus 20 to the household apparatus 20. In this case, where the start signal is received by the reception unit 24, the operation control unit 22 starts the operation of the household apparatus 20.

Further, even if the electricity rate information stored in the electricity rate information storing unit 13 has been updated after the user was notified that the operation of the household apparatus 20 is started, the recomputation determination unit 17 may instruct the time-shift time computation unit 14 to recompute the time-shift time. As a result, the time-shift time is not changed after the user has been notified that the operation of the household apparatus 20 is started or ended.

Even if the electricity rate information stored in the electricity rate information storing unit 13 has been updated after the user was notified that the operation of the household apparatus 20 is started, the recomputation determination unit 17 may instruct the time-shift time computation unit 14 to recompute the time-shift time only when the period from the present time to the time-shift time is longer than a predetermined time interval, without instructing the time-shift time computation unit 14 to recompute the time-shift time when the period from the present time to the time-shift time is equal to or shorter than the predetermined time interval. The predetermined time interval is, for example, 15 min, but the present invention is not limited to this value, and the time interval may be set to any value, such as 30 min or 1 h.

When the time-shift time is recomputed and the time-shift time is changed, the user may be asked to confirm that the time-shift time may be changed. In step S30 shown in Fig. 5, when it is determined that the recomputed time-shift time is the same as the initially computed time-shift time, the display unit 26 displays a display screen for asking the user to confirm whether or not the initially computed time-shift time may be changed. Whether or not to ask the user to confirm the necessity of changing the time-shift time when the time-shift time is changed may be set in advance.

In the present embodiment, the time-shift time computation unit 14 recomputes the time-shift time when the recomputation determination unit 17 determines that the time-shift time is to be recomputed, but the present invention is not limited to such a configuration. Thus, the notification unit 18 may also notify the user that the initially computed time-shift time is to be changed when the initially computed time-shift time is directly changed by the time-shift time computation unit 14 from the electric power supply company by a power demand management (DSM: Demand Side Management) system.

Embodiment 2

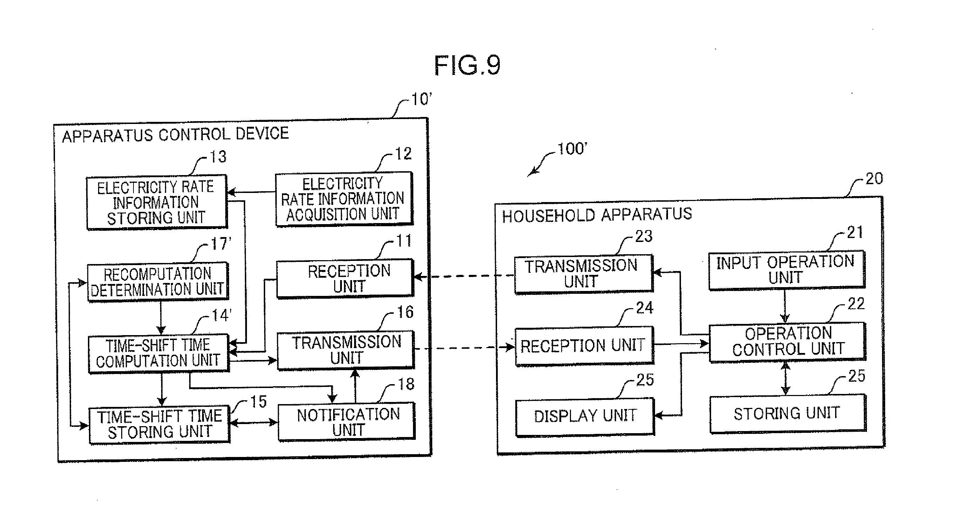

The apparatus control system of Embodiment 2 is explained below. Fig. 9 is a block diagram illustrating the configuration of the apparatus control system according to Embodiment 2 of the present invention. An apparatus control system 100' shown in Fig. 9 is provided with an apparatus control device 10' and the household apparatus 20. The entire configuration of the apparatus control system in Embodiment 2 is identical to that of the apparatus control system in Embodiment 1 shown in Fig. 1. The explanation of like features in the apparatus control system 100' according to Embodiment 2 and the apparatus control system 100 according to Embodiment 1 is herein omitted, and only different features are explained.

The apparatus control device 10' includes the reception unit 11, the electricity rate information acquisition unit 12, the electricity rate information storing unit 13, a time-shift time computation unit 14', the time-shift time storing unit 15, the transmission unit 16, a recomputation determination unit 17', and the notification unit 18.

The recomputation determination unit 17' determines that the time-shift time is to be recomputed when another household apparatus is intended to be operated within a scheduled operation period from the operation start time to the operation end time of the household apparatus 20 that are specified on the basis of the time-shift time computed by the time-shift time computation unit 14'.

When it is determined by the recomputation determination unit 17' that the time-shift time is to be recomputed, the time-shift time computation unit 14' recomputes the time-shift time so that the scheduled operation period does not include the period in which the operation of the other household apparatus is scheduled. In this case, the time-shift time computation unit 14' computes the operation start time such that the scheduled operation period does not include the period in which the operation of the other household apparatus is scheduled and electricity cost billed when the electric apparatus 20 is operated is the lowest on the basis of the operation period information and electric power information stored in the time-shift time storing unit 15 and the updated electricity rate information stored in the electricity rate information storing unit 13.

The operation of the apparatus control device in Embodiment 2 is explained below. The operation of the household apparatus in Embodiment 2 is the same as the operation of the household apparatus in Embodiment 1 and the explanation hereof is therefore omitted.

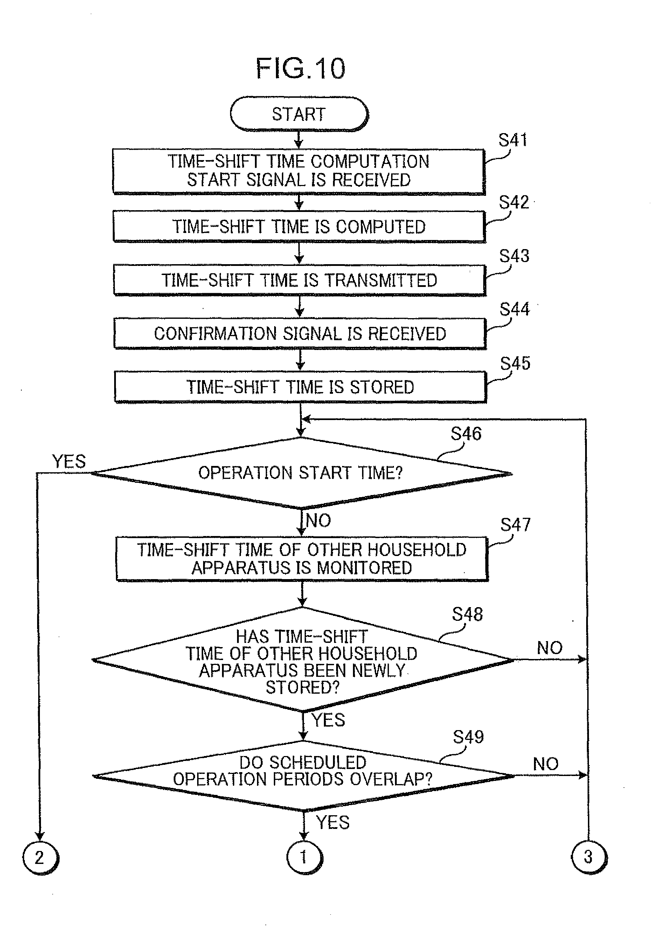

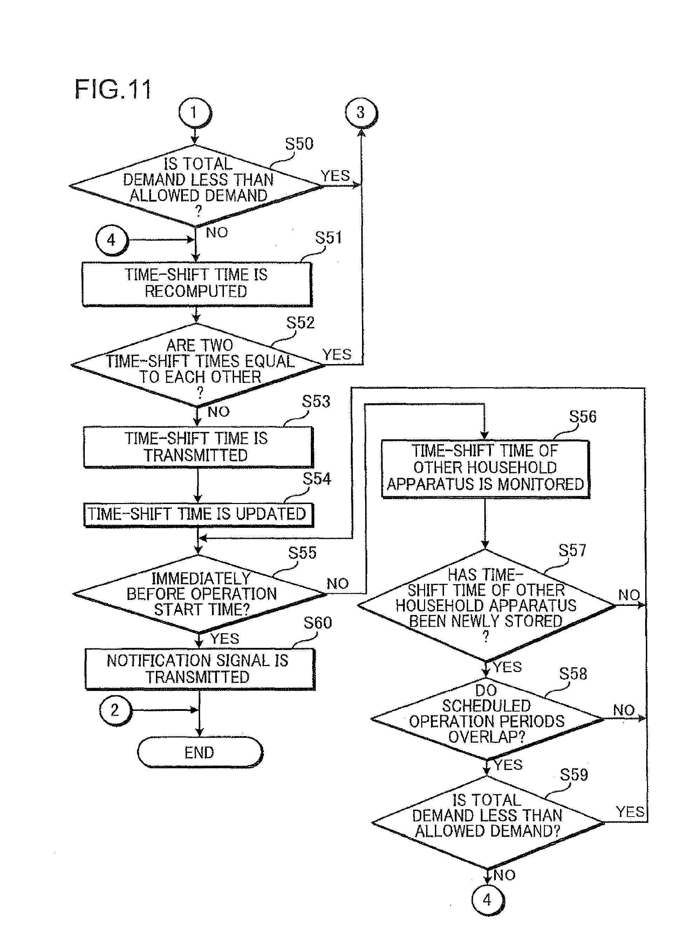

Figs. 10 and 11 are flowcharts for explaining the operation of the apparatus control device in Embodiment 2.

The processing of steps S41 to S46 is the same as the processing of steps S21 to S26 shown in Fig. 5 and the explanation thereof is herein omitted.

When it is determined that the operation start time (time-shift time) stored in the time-shift time storing unit 15 has not yet come (NO in step S46), the recomputation determination unit 17' monitors in step S47 the time-shift time of the other household apparatus stored in the time-shift time storing unit 15.

Then, in step S48, the recomputation determination unit 17' determines whether or not the time-shift time of the other household apparatus has been newly stored in the time-shift time storing unit 15. In this case, where it is determined that the time-shift time of the other household apparatus has not been newly stored in the time-shift time storing unit 15 (NO in step S48), the processing returns to step S46.

Meanwhile, where it is determined that the time-shift time of the other household apparatus has been newly stored in the time-shift time storing unit 15 (YES in step S48), in step S49, the recomputation determination unit 17' determines whether or not the scheduled operation period from the operation start time to the operation end time of the household apparatus 20 and the scheduled operation period from the operation start time to the operation end time of the other household apparatus overlap. The scheduled operation period is specified on the basis of the time-shift time stored in the time-shift time storing unit 15 and the operation period information In this case, where it is determined that the scheduled operation period of the household apparatus 20 and the scheduled operation period of the other household apparatus do not overlap (NO in step S49), the processing returns to step S46.

Meanwhile, where it is determined that the scheduled operation period of the household apparatus 20 and the scheduled operation period of the other household apparatus overlap (YES in step S49), in step S50, the recomputation determination unit 17' determines whether or not the sum total of the electric power required for the operation of the household apparatus 20 and the electric power required for the operation of the other household apparatus is less than the allowed demand. The allowed demand as referred to herein is the contract demand specified in advance by a contract. Where the contract demand is exceeded, the Ampere breaker of the entire house is tripped. In this case, where it is determined that the total demand is less than the allowed demand (YES in step S50), the processing returns to step S46.

Meanwhile, where it is determined that the total demand is equal to or greater than the allowed demand (NO in step S50), in step S51, the time-shift time computation unit 14' recomputes the time-shift time. In this case, the time-shift time computation unit 14' computes the operation start period such that the scheduled operation period of the household apparatus 20 and the scheduled operation period of the other household apparatus do not overlap and the electricity cost billed when the household apparatus 20 is operated is the lowest on the basis of the operation period information and electric power information stored in the time-shift time storing unit 15 and the updated electricity rate information stored in the electricity rate information storing unit 13.

The processing of steps S52 to S55 is the same as the processing of steps S30 to S33 shown in Figs. 5 and 6 and the explanation thereof is herein omitted.

Where it is determined that the present time is not immediately before the time-shift time (operation start time) after the change (NO in step S55), in step S56, the recomputation determination unit 17' monitors the time-shift time of the other household apparatus stored in the time-shift time storing unit 15.

Then, in step S57, the recomputation determination unit 17' determines whether or not the time-shift time of the other household apparatus has been newly stored in the time-shift time storing unit 15. In this case, where it is determined that the time-shift time of the other household apparatus has not been newly stored in the time-shift time storing unit 15 (NO in step S57), the processing returns to step S55.

Meanwhile, where it is determined that the time-shift time of the other household apparatus has been newly stored in the time-shift time storing unit 15 (YES in step S57), in step S58, the recomputation determination unit 17' determines whether or not the scheduled operation period from the operation start time to the operation end time of the household apparatus 20 and the scheduled operation period from the operation start time to the operation end time of the other household apparatus overlap. In this case, where it is determined that the scheduled operation period of the household apparatus 20 and the scheduled operation period of the other household apparatus do not overlap (NO in step S58), the processing returns to step S55.

Meanwhile, where it is determined that the scheduled operation period of the household apparatus 20 and the scheduled operation period of the other household apparatus overlap (YES in step S58), in step S59, the recomputation determination unit 17' determines whether or not the sum total of the electric power required for the operation of the household apparatus 20 and the electric power required for the operation of the other household apparatus is less than the allowed demand. In this case, where it is determined that the total demand is less than the allowed demand, (YES in step S59), the processing returns to step S55.

Meanwhile, where it is determined that the total demand is equal to or greater than the allowed demand (NO in step S59), the processing returns to step S51.

Where it is determined that the present time is immediately before the time-shift time (operation start period) after the change (YES in step S55), the transmission unit 16 transmits the notification signal to the household apparatus 20 in step S60.

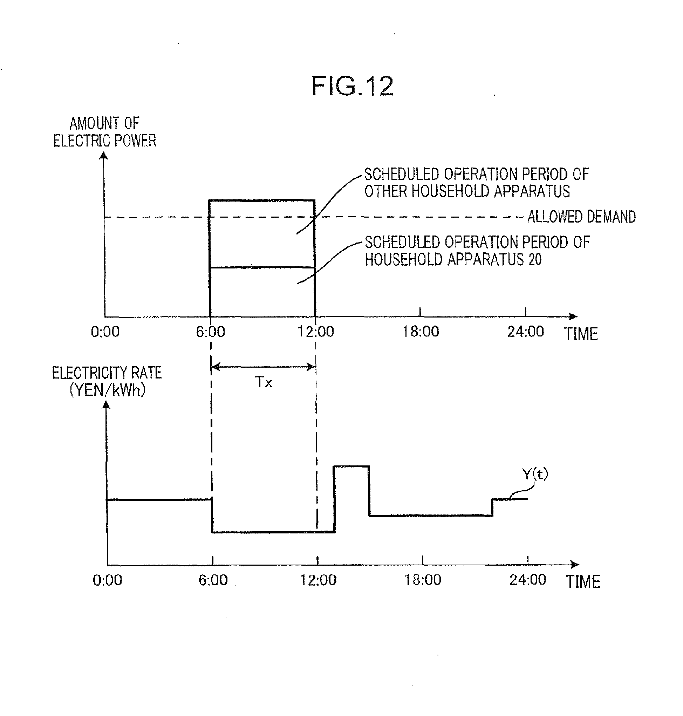

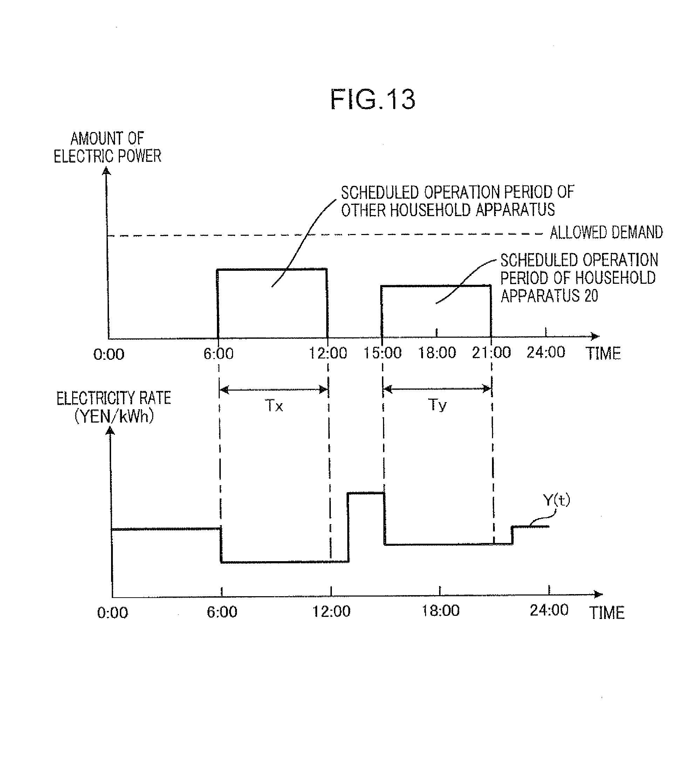

Fig. 12 is a schematic diagram for explaining the scheduled operation period before the recomputation of the time-shift time in Embodiment 2. Fig. 13 is a schematic diagram for explaining the scheduled operation period after the recalculation of the time-shift time in Embodiment 2. In the upper portion of Figs. 12 and 13, the time is plotted against the abscissa, and the amount of electric power is plotted against the ordinate. In the lower portion of Figs. 12 and 13, the time is plotted against the abscissa and the electricity rate (yen/kWh) is plotted against the ordinate.

As shown in Fig. 12, the time-shift time (operation start time) initially computed for the household apparatus 20 is taken as 6:00, and the scheduled operation period Tx is taken from 6:00 to 12:00. It is also assumed that the operation start time of the other household apparatus is thereafter set to 6:00 and the scheduled operation period is set to 6:00 to 12:00.

In this case, the sum total of the power required for the operation of the household apparatus 20 and the power required for the operation of the other household apparatus becomes equal to or greater than the allowed demand within the interval from 6:00 to 12:00, and the scheduled operation period Tx of the household apparatus 20 should be changed.

Accordingly, the time-shift time computation unit 14' computes the scheduled operation period Ty in which the scheduled operation period of the household apparatus 20 and the scheduled operation period of the other household apparatus do not overlap and the electricity cost billed when the household apparatus 20 is operated is the lowest on the basis of the operation period information and electric power information stored in the time-shift time storing unit 15 and the electricity rate information (electricity rate (Y(t)) stored in the electricity rate information storing unit 13, and then computes the time-shift time (operation start time) on the basis of the scheduled operation period Ty.

As shown in Fig. 13, the time-shift time computation unit 14' computes the scheduled operation period Ty in which the electricity cost billed when the household apparatus 20 is operated is the lowest within the period other than the scheduled operation period of the other household apparatus, and computed the time-shift time (operation start time) on the basis of the scheduled operation period Ty. As a result, the scheduled operation period Ty of the household apparatus 20 after the recomputation becomes 15:00 to 21:00, and the time-shift time (operation start time) of the household apparatus 20 after the recomputation becomes 15:00.

Thus, the household apparatus 20 can be operated, without the scheduled operation period of the household apparatus 20 overlapping the scheduled operation period of the other household apparatus.

Therefore, when the operation of the other household apparatus is scheduled within the scheduled operation period from the operation start period to the operation end period of the household apparatus specified on the basis of the time-shift time, the time-shift time is recomputed, and therefore power consumption can be diffused and power demand can be balanced.

Further, in Embodiment 2, when the scheduled operation period of the household apparatus 20 and the scheduled operation period of the other household apparatus overlap, the time-shift time of the household apparatus 20 for which the time-shift time has been determined is recomputed before everything else, but the present invention is not limited to such a configuration. For example, when a priority is assigned to each household apparatus and the scheduled operation period of the household apparatus 20 and the scheduled operation period of the other household apparatus overlap, the priority of the household apparatus 20 is compared with the priority of the other household apparatus, and where the priority of the other household apparatus is higher than the priority of the household apparatus 20, the time-shift time of the household apparatus 20 may be recomputed. When the priority of the other household apparatus is lower than the priority of the household apparatus 20, the time-shift time of the other household apparatus is recomputed without recomputing the time-shift time of the household apparatus 20.

The above-described specific embodiments mainly include the invention having the following features.

The apparatus control device according to one aspect of the present invention includes: a time-shift time computation unit that computes a time-shift time indicating an operation start time or an operation end time at which an electricity cost billed when an electric apparatus is operated is equal to or less than a predetermined rate; a change determination unit that determines whether or not to change the time-shift time computed by the time-shift time computation unit; and a notification unit that notifies a user that the initially computed time-shift time is to be changed when determination is made by the change determination unit that the time-shift time is to be changed.

With such a configuration, the time-shift time computation unit computes the time-shift time indicating the operation start time or operation end time at which the electricity cost billed when the electric apparatus is operated is equal to or less than the predetermined rate. The change determination unit determines whether or not to change the time-shift time computed by the time-shift time computation unit. The notification unit notifies the user that the initially computed time-shift time is to be changed when it is determined by the change determination unit that the time-shift time is to be changed.

Therefore when the initially computed time-shift time is changed, the user is notified that the initially computed time-shift time is changed. As a result, the user can recognize that the initially computed time-shift time is to be changed and the convenience for the user can be improved.

In the above-described apparatus control device, it is preferred that the change determination unit determine whether or not to recompute the time-shift time computed by the time-shift time computation unit; the time-shift time computation unit recompute the time-shift time when determination is made by the change determination unit that the time-shift time is to be recomputed; and the notification unit notify the user that the initially computed time-shift time is to be changed when the time-shift time recomputed by the time-shift time computation unit is different from the time-shift time initially computed by the time-shift time computation unit.

With such a configuration, the change determination unit determines whether or not to recompute the time-shift time computed by the time-shift time computation unit. The time-shift time computation unit recomputes the time-shift time when it is determined by the change determination unit that the time-shift time is to be recomputed. The notification unit notifies the user that the initially computed time-shift time is to be changed when the time-shift time recomputed by the time-shift time computation unit is different from the time-shift time initially computed by the time-shift time computation unit.

Therefore, when the recomputed time-shift time is different from the initially computed time-shift time, the user is notified that the initially computed time-shift time is to be changed. Therefore, the user can recognize that the initially computed time-shift time is to be changed and the convenience for the user can be improved.

It is preferred that the above-described apparatus control device further include an electricity rate information acquisition unit that acquires electricity rate information indicating an electricity rate that changes with time; and the change determination unit determine that the time-shift time is to be recomputed when the electricity rate information acquired by the electricity rate information acquisition unit has changed.

With such a configuration, the time-shift time is recomputed when the electricity rate information acquired by the electricity rate information acquisition unit has changed. Therefore, the time-shift time can be determined according to the present electricity rate.

In the above-described apparatus control device, it is preferred that the notification unit display the time-shift time recomputed by the time-shift time computation unit together with the time-shift time initially computed by the time-shift time computation unit.

With such a configuration, the recomputed time-shift time is displayed together with the initially computed time-shift time. Therefore, the user can recognize the recomputed time-shift time and the initially computed time-shift time.

Further, in the above-described apparatus control device, it is preferred that the notification unit notify the user that the operation of the electric apparatus is to be started immediately before the operation start time of the electric apparatus specified on the basis of the recomputed time-shift time.

With such a configuration, the user is notified that the operation of the electric apparatus is to be started immediately before the operation start time of the electric apparatus specified on the basis of the recomputed time-shift time. Therefore, the user can recognize that the initially computed time-shift time is to be changed immediately before the operation start time of the electric apparatus.

Further, in the above-described apparatus control device, it is preferred that the notification unit notify the user that the operation of the electric apparatus is to be ended immediately before the operation end time of the electric apparatus specified on the basis of the recomputed time-shift time.

With such a configuration, the user is notified that the operation of the electric apparatus is to be ended immediately before the operation end time of the electric apparatus specified on the basis of the recomputed time-shift time. Therefore, the user can recognize that the initially computed time-shift time is to be changed immediately before the operation end time of the electric apparatus.

Further, in the above-described apparatus control device, it is preferred that the notification unit notify the user of the recomputed time-shift time after the operation of the electric apparatus has ended.

With such a configuration, the user is notified of the recomputed time-shift time after the operation of the electric apparatus has ended. Therefore, the user can recognize the recomputed time-shift time after the operation of the electric apparatus has ended.

The apparatus control method according to another aspect of the present invention includes a time-shift time computation step of computing a time-shift time indicating an operation start time or an operation end time at which an electricity cost billed when an electric apparatus is operated is equal to or less than a predetermined rate; a change determination step of determining whether or not to change the time-shift time computed by the time-shift time computation unit; and a notification step of notifying the user that the initially computed time-shift time is to be changed when determination is made by the change determination unit that the time-shift time is to be changed.

With such a configuration, in the time-shift time computation step, a time-shift time indicating an operation start time or an operation end time at which an electricity cost billed when an electric apparatus is operated is equal to or less than a predetermined rate is computed. Then, in the change determination step, it is determined whether or not the time-shift time computed in the time-shift time computation step is to be changed, and in the notification step the user is notified that the initially computed time-shift time is to be changed when it is determined in the change determination step that the time-shift time is to be changed.

Therefore, the user is notified that the initially computed time-shift time is changed when the initially computed time-shift time has been changed. As a result, the user can recognize that the initially computed time-shift time is changed and the convenience for the user can be improved.

Specific embodiments or examples illustrating the implementation modes of the invention have been described for the sole purpose of illustrating the technical contents of the present invention, and the present invention should not be interpreted narrowly only to such specific examples. Rather, various modifications may be made without departing from the spirit of the invention and from the scope of the claims.

Industrial Applicability

The apparatus control device and apparatus control method in accordance with the present invention are suitable for apparatus control devices and apparatus control methods which can improve convenience for the user and control the operation start time or operation end time of electric apparatuses.

**Claims**

1. An apparatus control device comprising:

    a time-shift time computation unit that computes a time-shift time indicating an operation start time or an operation end time at which an electricity cost billed when an electric apparatus is operated is equal to or less than a predetermined rate;
    a change determination unit that determines whether or not to change the time-shift time computed by the time-shift time computation unit; and
    a notification unit that notifies a user that the initially computed time-shift time is to be changed when determination is made by the change determination unit that the time-shift time is to be changed.

2. The apparatus control device according to claim 1, wherein
    the change determination unit determines whether or not to recompute the time-shift time computed by the time-shift time computation unit;
    the time-shift time computation unit recomputes the time-shift time when determination is made by the change determination unit that the time-shift time is to be recomputed; and
    the notification unit notifies the user that the initially computed time-shift time is to be changed when the time-shift time recomputed by the time-shift time computation unit is different from the time-shift time initially computed by the time-shift time computation unit.

3. The apparatus control device according to claim 2, further comprising an electricity rate information acquisition unit that acquires electricity rate information indicating an electricity rate that changes with time; and
    the change determination unit determines that the time-shift time is to be recomputed when the electricity rate information acquired by the electricity rate information acquisition unit has changed.

4. The apparatus control device according to claim 2 or 3, wherein the notification unit displays the time-shift time recomputed by the time-shift time computation unit together with the time-shift time initially computed by the time-shift time computation unit.

5. The apparatus control device according to any of claims 2 to 4, wherein the notification unit notifies the user that the operation of the electric apparatus is to be started immediately before the operation start time of the electric apparatus specified on the basis of the recomputed time-shift time.

6. The apparatus control device according to claim 5, wherein the notification unit notifies the user that the operation of the electric apparatus is to be ended immediately before the operation end time of the electric apparatus specified on the basis of the recomputed time-shift time.

7. The apparatus control device according to claim 5, wherein the notification unit notifies the user of the recomputed time-shift time after the operation of the electric apparatus has ended.

8. An apparatus control method comprising:

    a time-shift time computation step of computing a time-shift time indicating an operation start time or an operation end time at which an electricity cost billed when an electric apparatus is operated is equal to or less than a predetermined rate;
    a change determination step of determining whether or not to change the time-shift time computed in the time-shift time computation step; and
    a notification step of notifying the user that the initially computed time-shift time is to be changed when determination is made in the change determination step that the time-shift time is to be changed.

**Amended claims under Art. 19.1 PCT**

**1.** (Amended) An apparatus control device comprising:

a time-shift time computation unit that computes a time-shift time indicating an operation start time or an operation end time at which an electricity cost billed when an electric apparatus is operated is equal to or less than a predetermined rate;
an electricity rate information acquisition unit that acquires electricity rate information indicating an electricity rate that changes with time;
a change determination unit that determines whether or not to change the time-shift time computed by the time-shift time computation unit; and
a notification unit that notifies a user that the initially computed time-shift time is to be changed when determination is made by the change determination unit that the time-shift time is to be changed, wherein
the change determination unit determines that the time-shift time is to be recomputed when the electricity rate information acquired by the electricity rate information acquisition unit has changed; and
the time-shift time computation unit recomputes the time-shift time when determination is made by the change determination unit that the time-shift time is to be recomputed.

**2.** (Amended) The apparatus control device according to claim 1, wherein the notification unit notifies the user that the initially computed time-shift time is to be changed when the time-shift time recomputed by the time-shift time computation unit is different from the time-shift time initially computed by the time-shift time computation unit.

**3.** (Deleted)

**4.** (Amended) The apparatus control device according to claim 1 or 2, wherein the notification unit displays the time-shift time recomputed by the time-shift time computation unit together with the time-shift time initially computed by the time-shift time computation unit.

**5.** (Amended) The apparatus control device according to any one of claims 1, 2, or 4, wherein the notification unit notifies the user that the operation of the electric apparatus is to be started immediately before the operation start time of the electric apparatus specified on the basis of the recomputed time-shift time.

**6.** The apparatus control device according to claim 5, wherein the notification unit notifies the user that the operation of the electric apparatus is to be ended immediately before the operation end time of the electric apparatus specified on the basis of the recomputed time-shift time.

**7.** The apparatus control device according to claim 5, wherein the notification unit notifies the user of the recomputed time-shift time after the operation of the electric apparatus has ended.

**8.** (Amended) An apparatus control method comprising:

a time-shift time computation step of computing a time-shift time indicating an operation start time or an operation end time at which an electricity cost billed when an electric apparatus is operated is equal to or less than a predetermined rate;
an electricity rate information acquisition step of acquiring electricity rate information indicating an electricity rate that changes with time;
a change determination step of determining whether or not to change the time-shift time computed in the time-shift time computation step; and
a notification step of notifying the user that the initially computed time-shift time is to be changed when determination is made in the change determination step that the time-shift time is to be changed, wherein
in the change determination step, determination is made to recomputed the time-shift time when the electricity rate information acquired in the electricity rate information acquisition step has changed, and
the apparatus control method further including a time-shift time recomputation step in which the time-shift time is recomputed when determination is made in the change determination step that the time-shift time is to be recomputed.

FIG.1

# FIG.2

APPARATUS CONTROL DEVICE ~10

100

ELECTRICITY RATE INFORMATION STORING UNIT ~13

ELECTRICITY RATE INFORMATION ACQUISITION UNIT ~12

RECOMPUTATION DETERMINATION UNIT ~17

RECEPTION UNIT ~11

TIME-SHIFT TIME COMPUTATION UNIT ~14

TRANSMISSION UNIT ~16

TIME-SHIFT TIME STORING UNIT ~15

NOTIFICATION UNIT ~18

HOUSEHOLD APPARATUS ~20

TRANSMISSION UNIT ~23

INPUT OPERATION UNIT ~21

RECEPTION UNIT ~24

OPERATION CONTROL UNIT ~22

DISPLAY UNIT ~26

STORING UNIT ~25

EP 2 632 022 A1

## FIG.3

```
              ┌──────────────┐
              │    START     │
              └──────────────┘
                     │
     ┌───────────────────────────────────┐  S1
     │  POWER SOURCE IS SWITCHED ON       │
     └───────────────────────────────────┘
                     │
     ┌───────────────────────────────────┐  S2
     │  TIME-SHIFT TIME COMPUTATION START │
     │       SIGNAL IS GENERATED          │
     └───────────────────────────────────┘
                     │
     ┌───────────────────────────────────┐  S3
     │  TIME-SHIFT TIME COMPUTATION START │
     │      SIGNAL IS TRANSMITTED         │
     └───────────────────────────────────┘
                     │
              ╱────────────╲  S4
             ╱  IS TIME-SHIFT ╲       NO
            ╱ TIME RECEIVED WITHIN╲──────────┐
            ╲ PREDETERMINED TIME? ╱          │
             ╲──────────────╱                │
                   │ YES                      │
     ┌───────────────────────────┐ S6        │
     │ TIME-SHIFT TIME IS DISPLAYED│          │
     └───────────────────────────┘           │
                   │                          │
            ╱────────────╲  S7                │
   NO      ╱     HAS       ╲                  │
  ┌───────╱ NUMERICAL VALUE ╲                 │
  │       ╲INCREASE/DECREASE BUTTON╱          │
  │        ╲  BEEN PUSHED? ╱                  │
  │          ╲──────────╱                     │
  │             │ YES                         │
  │   ┌────────────────────┐ S8              ┌──────────────────┐  S5
  │   │ DISPLAYED NUMERICAL │               │  USER IS NOTIFIED OF │
  │   │ VALUE IS CHANGED    │               │  SYSTEM FAILURE      │
  │   └────────────────────┘               └──────────────────┘
  │             │                                  │
  └─────────────┤                           ┌──────────────┐
                │                           │     END      │
          ╱────────────╲  S9               └──────────────┘
         ╱   HAS CANCEL  ╲       YES
        ╱ BUTTON BEEN PUSHED?╲──────────┐
         ╲──────────────╱               │
                │ NO                      │
     ┌────────────────────┐ S10          │
     │ CONFIRMATION SIGNAL │             │
     │  IS TRANSMITTED     │             │
     └────────────────────┘             │
                │                         │
              (  1  )                  (  2  )
```

# FIG.4

```
        ( 1 )                                    ( 2 )
          │                                        │
          ▼                            S11         │
┌─────────────────────────────────┐               │
│   TIME-SHIFT TIME IS STORED      │               │
└─────────────────────────────────┘               │
          │                                        │
          ▼                            S12         │
        ◇◇◇◇◇◇◇◇◇◇◇◇◇◇◇◇◇                          │
      ◇◇◇                ◇◇◇        YES            │
    ◇◇   OPERATION START   ◇◇──────────────┐       │
      ◇◇     TIME?       ◇◇                │       │
        ◇◇◇            ◇◇◇                 ▼       ▼        S13
           ◇◇  NO  ◇◇              ┌─────────────────────────┐
              │                    │  HOUSEHOLD APPARATUS     │
              ▼           S14      │      IS OPERATED         │
         ◇◇◇◇◇◇◇◇◇◇◇◇◇◇◇           └─────────────────────────┘
       ◇◇   HAS TIME-    ◇◇                     │
 NO  ◇◇ SHIFT TIME AFTER THE ◇◇                ▼
◄────◇◇    CHANGE BEEN    ◇◇             ╭──────────────╮
       ◇◇   RECEIVED?    ◇◇             │     END      │
          ◇◇         ◇◇                 ╰──────────────╯
              │  YES              S15
              ▼
┌─────────────────────────────────┐
│   TIME-SHIFT TIME IS UPDATED     │
└─────────────────────────────────┘
              │
              ▼               S16
         ◇◇◇◇◇◇◇◇◇◇◇◇◇◇◇
 NO   ◇◇   HAS NOTIFICATION  ◇◇
◄────◇◇  SIGNAL BEEN RECEIVED?  ◇◇
         ◇◇◇◇◇◇◇◇◇◇◇◇◇◇◇
              │  YES         S17
              ▼
┌─────────────────────────────────┐
│  OPERATION START OF HOUSEHOLD    │
│    APPARATUS IS DISPLAYED        │
└─────────────────────────────────┘
```

## FIG.5

```
                    START

                                                    S21
    TIME-SHIFT TIME COMPUTATION
      START SIGNAL IS RECEIVED

                                                    S22
      TIME-SHIFT TIME IS COMPUTED

                                                    S23
      TIME-SHIFT TIME IS TRANSMITTED

                                                    S24
      CONFIRMATION SIGNAL IS RECEIVED

                                                    S25
      TIME-SHIFT TIME IS STORED
```

```
                                          S26
                                                  YES
              OPERATION START TIME?

                        NO
                                          S27
    ELECTRIC RATE INFORMATION IS MONITORED

                                          S28
                    HAS ELECTRIC
    NO         RATE INFORMATION BEEN
                     CHANGED?

     ③                          YES

                                          S29
      TIME-SHIFT TIME IS RECOMPUTED

                                          S30
                    ARE TWO TIME-
    YES        SHIFT TIMES EQUAL TO EACH
                       OTHER?

                        NO

                        ①                          ②
```

# FIG.6

# FIG.7

ELECTRICITY RATE
(YEN/kWh)

Y(t)

Tx

ta          t1    t2          TIME

23

# FIG.8

FIG.9

APPARATUS CONTROL DEVICE 10'

ELECTRICITY RATE INFORMATION STORING UNIT 13

ELECTRICITY RATE INFORMATION ACQUISITION UNIT 12

RECOMPUTATION DETERMINATION UNIT 17'

RECEPTION UNIT 11

TIME-SHIFT TIME COMPUTATION UNIT 14'

TRANSMISSION UNIT 16

TIME-SHIFT TIME STORING UNIT 15

NOTIFICATION UNIT 18

HOUSEHOLD APPARATUS 20

TRANSMISSION UNIT 23

INPUT OPERATION UNIT 21

RECEPTION UNIT 24

OPERATION CONTROL UNIT 22

DISPLAY UNIT 25

STORING UNIT 25

100'

EP 2 632 022 A1

# FIG.10

START

TIME-SHIFT TIME COMPUTATION
START SIGNAL IS RECEIVED — S41

TIME-SHIFT TIME IS COMPUTED — S42

TIME-SHIFT TIME IS TRANSMITTED — S43

CONFIRMATION SIGNAL IS RECEIVED — S44

TIME-SHIFT TIME IS STORED — S45

OPERATION START TIME? — S46
YES

NO

TIME-SHIFT TIME OF OTHER HOUSEHOLD
APPARATUS IS MONITORED — S47

HAS TIME-SHIFT
TIME OF OTHER HOUSEHOLD
APPARATUS BEEN NEWLY
STORED? — S48
NO

YES

DO SCHEDULED
OPERATION PERIODS OVERLAP? — S49
NO

YES

② ① ③

## FIG.11

```
        (1)                              (3)
         |                                ▲
         ▼                    S50         |
    ╱─────────────╲                       |
   ╱  IS TOTAL     ╲    YES               |
  ╱ DEMAND LESS THAN ╲──────────────────┘
  ╲ ALLOWED DEMAND  ╱
   ╲      ?        ╱
    ╲─────────────╱
         │ NO              S51
  (4)────┤
         ▼
  ┌──────────────────┐
  │ TIME-SHIFT TIME IS│
  │   RECOMPUTED      │
  └──────────────────┘
         │              S52
         ▼
    ╱─────────────╲
   ╱  ARE TWO      ╲    YES
  ╱ TIME-SHIFT TIMES EQUAL ╲───────────────────────┐
  ╲  TO EACH OTHER  ╱                               │
   ╲      ?        ╱                                │
    ╲─────────────╱                                 │
         │ NO           S53          ┌──────────────┴──────────────┐
         ▼                           ▼                             │
  ┌──────────────────┐        ┌──────────────────────┐            │
  │ TIME-SHIFT TIME IS│       │  TIME-SHIFT TIME OF   │  S56       │
  │   TRANSMITTED     │       │  OTHER HOUSEHOLD      │            │
  └──────────────────┘        │ APPARATUS IS MONITORED│           │
         │           S54       └──────────────────────┘           │
         ▼                                │                        │
  ┌──────────────────────┐               ▼        S57             │
  │TIME-SHIFT TIME IS UPDATED│      ╱─────────────╲                │
  └──────────────────────┘        ╱   HAS TIME-    ╲   NO          │
         │◄──────────────┐       ╱ SHIFT TIME OF OTHER ╲──────────►│
         ▼          S55   │      ╲ HOUSEHOLD APPARATUS ╱           │
    ╱─────────────╲       │       ╲ BEEN NEWLY STORED ╱            │
   ╱  IMMEDIATELY  ╲  NO  │        ╲      ?         ╱               │
  ╱ BEFORE OPERATION ╲────┘         ╲─────────────╱                │
  ╲  START TIME?    ╱                    │ YES     S58             │
   ╲─────────────╱                       ▼                         │
         │ YES         S60          ╱─────────────╲                │
         ▼                         ╱      DO        ╲   NO          │
  ┌──────────────────┐            ╱  SCHEDULED       ╲─────────────►│
  │NOTIFICATION SIGNAL IS│        ╲ OPERATION PERIODS ╱             │
  │   TRANSMITTED     │           ╲   OVERLAP?      ╱               │
  └──────────────────┘             ╲─────────────╱                 │
         │                              │ YES      S59             │
  (2)────┤                              ▼                          │
         ▼                         ╱─────────────╲                 │
    ┌─────────┐                   ╱  IS TOTAL      ╲   YES          │
    │   END   │                  ╱ DEMAND LESS THAN ╲──────────────┘
    └─────────┘                  ╲ ALLOWED DEMAND? ╱
                                  ╲─────────────╱
                                       │ NO
                                       ▼
                                      (4)
```

# FIG.12

AMOUNT OF
ELECTRIC POWER

SCHEDULED OPERATION PERIOD OF
OTHER HOUSEHOLD APPARATUS

— — — — — — — — — — — ALLOWED DEMAND

SCHEDULED OPERATION PERIOD OF
HOUSEHOLD APPARATUS 20

0:00      6:00      12:00      18:00      24:00   TIME

Tx

ELECTRICITY RATE
(YEN/kWh)

Y(t)

0:00      6:00      12:00      18:00      24:00   TIME

# FIG.13

AMOUNT OF
ELECTRIC POWER

SCHEDULED OPERATION PERIOD OF
OTHER HOUSEHOLD APPARATUS

ALLOWED DEMAND

SCHEDULED OPERATION
PERIOD OF HOUSEHOLD
APPARATUS 20

0:00    6:00    12:00  15:00  18:00  21:00  24:00    TIME

Tx                    Ty

ELECTRICITY RATE
(YEN/kWh)

Y(t)

0:00    6:00    12:00    18:00    24:00    TIME

29

<table>
<tr><td colspan="2" align="center"><strong>INTERNATIONAL SEARCH REPORT</strong></td><td>International application No.<br>PCT/JP2011/005671</td></tr>
</table>

**A. CLASSIFICATION OF SUBJECT MATTER**
*H02J13/00*(2006.01)i, *H02J3/00*(2006.01)i

According to International Patent Classification (IPC) or to both national classification and IPC

**B. FIELDS SEARCHED**

Minimum documentation searched (classification system followed by classification symbols)
H02J13/00, H02J3/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2003-111311 A (Toyota Industries Corp.), 11 April 2003 (11.04.2003), claims 1, 3, 6, 7; paragraphs [0031] to [0054], [0071] to [0077]; fig. 8 (Family: none) | 1-8 |
| Y | JP 2009-261159 A (Panasonic Electric Works Co., Ltd.), 05 November 2009 (05.11.2009), claim 1; paragraphs [0038] to [0051]; fig. 4 (Family: none) | 1-8 |
| Y | JP 2002-118986 A (Matsushita Electric Industrial Co., Ltd.), 19 April 2002 (19.04.2002), paragraphs [0033] to [0047] (Family: none) | 5-7 |

☒ Further documents are listed in the continuation of Box C.        ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>14 December, 2011 (14.12.11) | Date of mailing of the international search report<br>27 December, 2011 (27.12.11) |
|---|---|
| Name and mailing address of the ISA/<br>Japanese Patent Office | Authorized officer |
| Facsimile No. | Telephone No. |

Form PCT/ISA/210 (second sheet) (July 2009)

30

**INTERNATIONAL SEARCH REPORT**

International application No.

PCT/JP2011/005671

C (Continuation).    DOCUMENTS CONSIDERED TO BE RELEVANT

| Category* | Citation of document, with indication, where appropriate, of the relevant passages | Relevant to claim No. |
|---|---|---|
| A | JP 11-41808 A  (Matsushita Electric Industrial Co., Ltd.), 12 February 1999 (12.02.1999), entire text; all drawings (Family: none) | 1-8 |
| A | JP 2008-67473 A  (The Chugoku Electric Power Co., Inc.), 21 March 2008 (21.03.2008), claim 5; paragraphs [0040] to [0042]; fig. 8 (Family: none) | 1-8 |

Form PCT/ISA/210 (continuation of second sheet) (July 2009)

**EP 2 632 022 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007124793 A